# EUROPEAN PATENT APPLICATION

(11) **EP 2 388 238 A1**
(43) Date of publication of application: **23.11.2011**
(21) Application number: 11164001.7
(22) Date of filing: 28.04.2011
(51) Int. Cl.: C01G 31/00, C01G 31/02, C01G 49/00, C01G 53/00, C22B 3/08, C22B 7/00, C22B 34/22, C01G 9/00, C01F 5/22

(54) **Process for preparing vanadium pentoxide**

(30) Priority: 18.05.2010 NL 2004740
(71) Applicant: Greenshores Patent BV, Netherlands Antilles (NL)
(72) Inventor: Mambote, Cyril Roger Mpai, 3195 SG, Pernis (NL)
(74) Representative: Cramwinckel, Michiel

(57) **Abstract**

The invention is directed to a process for preparing vanadium pentoxide from an ash composition comprising solid ash particles, vanadium, iron and nickel compounds optionally present in an aqueous solution. The process comprises the following steps:
(i) leaching the ash composition by contacting the ash composition with an acid aqueous solution at a pH of below 1,
(ii) adding a reducing agent to the aqueous solution,
(iii) contacting the aqueous solution obtained in step
(ii) with an ion exchange resin in its H⁺ ionic form,
(iv) desorption of the vanadium compounds from the ion exchange resin rich in vanadium compounds by contacting the ion exchange resin with an aqueous solution of H₂SO₄ to obtain an aqueous solution rich in vanadium compounds, and
(v) converting and isolating the vanadium compounds as present in the aqueous solution to vanadium pentoxide.

## Description

The invention is directed to a process for preparing vanadium pentoxide from an ash composition comprising solid ash particles, vanadium, iron and nickel compounds optionally present in an aqueous solution.

Such a process is described in US-A-4637920. This publication describes a process for recovering vanadium and nickel from combustion dust and ashes by sulphuric acid leaching followed by a purification treatment of the leach solution for nickel and vanadium recovery. To the leach solution ammonia is added to increase the pH to about 1, contacted with iron scrap and subsequently more ammonia is added to increase the pH to 5.8-5.9. Vanadium precipitates as ammonium polyvanadate. After roasting the vanadium precipitate vanadium pentoxide is obtained. Iron is removed from the remaining aqueous solution by increasing the pH to 10-10.5, adding hydrogen peroxide to convert all iron to its trivalent state and precipitation of Fe(OH)₃ while nickel remains in solution.

Another process is described in NL-C-1034329. This publication also describes a process recovering vanadium and nickel from combustion dust and ashes by sulphuric acid leaching followed by a purification treatment of the leach solution for nickel and vanadium recovery. In this process iron is removed from the leach solution as Fe(OH)₃ by slowly increasing the pH from 0.4 to 2 while vigorously stirring the solution. Subsequently nickel is removed by means of cementation at a pH of 2 and vanadium is removed by precipitation with ammonium hydroxide while increasing the pH from 3.5 to 7. Vanadium pentoxide is obtained by calcination of the thus obtained vanadium precipitate.

A problem associated with the above processes is that it has been found difficult to remove iron from the leach solution which also contains vanadium and nickel compounds. Fe(OH)₃ has been found to form complex polymers resulting in a gel type composition which in turn is difficult to separate from the aqueous solution. Another problem is co-precipitation of part of the vanadium compounds while separating iron and slow conversion rate of the ferrous ions to ferric ions.

The object of the present process is to provide a process which can prepare vanadium pentoxide in a more efficient manner.

This object is achieved by the following process. Process for preparing vanadium pentoxide from an ash composition comprising solid ash particles, vanadium, iron and nickel compounds optionally present in an aqueous solution wherein the process comprises the following steps:
(i) leaching the ash composition by contacting the ash composition with an acid aqueous solution at a pH of below 1 wherein the vanadium compounds dissolve in the aqueous solution and separating the solid ash particles and the aqueous solution,
(ii) adding a reducing agent to the aqueous solution such that vanadium as present in the vanadium compounds is converted to VO²⁺ ions before, during or after separating the solid ash particles,
(iii) contacting the aqueous solution obtained in step (ii) with an ion exchange resin in its H⁺ ionic form, which ion exchange resin is selective for VO²⁺ ions, such to obtain an aqueous solution poor in vanadium compounds and an ion exchange resin loaded with vanadium compounds,
(iv) desorption of the vanadium compounds from the ion exchange resin rich in vanadium compounds by contacting the ion exchange resin with an aqueous solution of H₂SO₄ to obtain an aqueous solution rich in vanadium compounds,
(v) converting and isolating the vanadium compounds as present in the aqueous solution to vanadium pentoxide.

Applicants have found that by separating vanadium by means of ion exchange resin it has become possible to perform the iron precipitation step in the absence of vanadium. This is advantageous because in this manner less or none of the desired vanadium can co-precipitate with the iron. Other advantages will be discussed when discussing the preferred embodiments described below.

The feed of the present process, namely the ash composition comprising solid ash particles, vanadium, iron and nickel compounds may optionally also comprise water. Preferably the present process starts with an ash composition having a relatively high vanadium content. Preferably the vanadium content (as an element) is between 10 and 30 wt% on a dry-solids basis. The ash composition may for example be dry, wet or be present in an aqueous solution. The ash may additionally comprise carbon. Carbon containing ash is for example obtained when fully or partially combusting the residual fractions of mineral oil feedstocks or partial combustion of petroleum coke (petcoke) or coal. Examples of possible mineral oil feedstocks are tar sands and more preferably crude oil feedstocks. The combustion gasses of these fully or partial combustion processes are subjected to a water washing step wherein the ash particles are captured in the water phase. Because the content of ash particles in such a water phase can be very low, e.g. between 0.5-1.5 wt a de-watering step is suitably performed prior to using the ash particles as feed in the process of the present invention. A suitable dewatering process is described in US-A-5628911. This publication describes a dewatering of the ash slurry, to which a flocculant has been added, by means of a movable filter, consisting of a horizontally movable filterband followed by two vertically moving filterbands compressed by means of rollers pressing the filterbands together to exert a constant pressure until the water content of the soot filtercake is reduced to less than 80%. An alternative de-watering process is described in US-A-2004116765 which describes a process wherein dewatering is performed by means of a decanter centrifuge. The dewatered ash composition is preferably used as feed to the present process and the separated water can be re-used in the above described washing step.

In step (i) the ash composition is leached by contacting the ash composition with an acid aqueous solution at a pH of below 1. The acid is preferably an aqueous solution of H₂SO₄. The weight content of ash composition in step (i) is not critical. Too high content will make the mixture too viscous and a too low content is economically not attractive. A suitable range is between 5 and 30 wt%. The pressure at which step (i) is performed is preferably atmospheric pressure, although higher pressures may be applied. The temperature at which step (i) is performed may be ambient temperatures. Higher temperatures are advantageous because the leaching is more effective and lower contact times may then be applied. Preferably the temperature is above 50 °C and more preferably above 70 °C. The upper temperature is the boiling temperature of the aqueous solution. The temperature is preferably maintained by direct or indirect heat exchange, suitably by supplying steam to the aqueous solution when performing step (i). Preferably the contact time is greater than 2 hours, more preferably greater than 3 hours. There is no upper limit to the contact time, but after a certain higher contact time the amount of vanadium leaching becomes very low. The practical upper limit is therefore 8, more preferably 5 hours.

Preferably step (i) by first contacting the ash composition with a first aqueous solution having a pH of between 5 and 8 at a temperature of above 50°C, preferably above 70 °C and below the boiling temperature of the first aqueous solution. The temperature is preferably maintained by supplying steam to the aqueous solution similar to the above procedure. Preferably the contact time is greater than 1 hours, more preferably greater than 3 hours Subsequently concentrated H₂SO₄ is suitably added to said solution to arrive at a second aqueous solution having a pH of below 1 to perform step (i). The contacting with the second aqueous solution is performed as described above.

In the above described leaching step nickel and iron compounds also dissolve in the aqueous solution. In step (ii) a reducing agent is added to the aqueous solution such that vanadium as present in the vanadium compounds is converted to VO²⁺ ions. The reducing agent will also convert the iron compounds to its ferrous form. This is advantageous because less iron will thus be loaded onto the ion-exchange resin in step (iii). Addition of the reducing agent can be performed before, during or after separating the solid ash particles. In a preferred embodiment the reducing agent is added after contacting with the aqueous solution at a pH of below 1 and before separating off the ash particles. A preferred reducing agent is Na₂SO₃, which compound is preferably added as a solid to said solution. Other possible reducing agents are Na₂C₂O₄ and gaseous SO₂.

Step (i) is preferably performed in an agitated tank reactor. The process can be performed as a continuous process. More preferably step (i) is performed in a batch operation wherein contacting with the first aqueous solution and contacting with the second aqueous solution is performed in the same stirred tank reactor. More preferably contacting with the first aqueous solution, contacting with the second aqueous solution and addition of solid Na₂SO₃ is performed in the same stirred tank reactor in subsequent batch operations.

Preferably the pH of the aqueous solution obtained in step (ii) is adjusted to a value of between 1 and 2 before using said solution in step (iii). Preferably the pH is adjusted to a value of below 1.8 before using said solution in step (iii). Applicants found that vanadium and iron compounds may precipitate in the solution when the pH is too high. Adjusting the pH is preferably performed by adding a solution of NaOH or Na₂CO₃. Adjusting the pH may be performed prior, during or after separating the ash particles. Preferably adjusting the pH is performed after separating the ash particles.

In step (iii) the aqueous solution obtained in step (ii) is contacted with an ion exchange resin in its H⁺ ionic form, which ion exchange resin is selective for VO²⁺ ions, such to obtain an aqueous solution poor in vanadium compounds and an ion exchange resin loaded with vanadium compounds. Ion exchange separation involves the interchange of ions between the aqueous solution and a solid resin. Step (iii) involves a three step operation preferably performed in columns filled with resin. The first is the transfer of the vanadium ion from the solution to the ion exchange resin, the second is the physical separation of the depleted solution from the resin, and the third is the transfer of the metal ion from the resin into a fresh aqueous solution. The first step is usually known as adsorption or loading and the last step as desorption or elution.

Preferably prior to performing step (iv) the loaded ion exchange resin is contacted with an aqueous solution which is selective for desorption of iron compounds from the loaded ion-exchange resin and not selective for desorption of vanadium compounds. Although a large portion of the iron compounds are converted to the ferrous form some iron compounds are loaded on the ion exchange resin. In order to avoid that vanadium and iron are simultaneously desorped it has been found preferred to first remove iron. Preferred selective solutions are aqueous solutions comprising EDTA which are preferably used to desorb iron selectively from the ion exchange resin.

Iron can be separated from the EDTA solution by known processes. Preferably iron is separated by contacting the solution with NaOH at a temperature of between 40 and 80 °C whereby iron precipitates as Fe(OH)₂. The advantage of this embodiment is that no other metal compounds are present in the iron containing solution which simplifies the iron precipitation and avoids the disadvantages of the prior art processes. The EDTA solution as obtained after iron precipitation/separation can be re-used in the process.

In step (iv) the vanadium compounds are desorbed from the ion exchange resin rich in vanadium compounds by contacting the ion exchange resin with an aqueous solution of H₂SO₄ to obtain an aqueous solution rich in vanadium compounds.

The ion exchange resin is subjected to a conditioning step after desorption of the iron and vanadium metals to make the resin suited for a next loading step. Conditioning of the resin to its H⁺ ionic form is preferably performed by contacting the resin with NaOH and subsequently with HCl containing aqueous solutions.

The type of ion exchange resin will be dependant on the desired quality of the separation selectivity and the composition of the feed to step (iii). The ion exchange resin may for example have chelating iminodiacetate groups for the selective removal of the metal cations. An example of such a resin is Lewatit TP 207 as obtainable from Sybron Chemicals Inc. More preferably the ion exchange resin is a strong acid type resin, for example resins having aminophosphoric groups, such as Duolite C467 as obtainable from Born Chemicals Co. Ltd.

Converting and isolating the vanadium compounds in step (v) is performed by first precipitation of the vanadium compounds from the aqueous solution. Precipitation can be performed by contacting the solution with gaseous NH₃ or solutions of NH₄OH or NH₄Cl. In a preferred embodiment an aqueous solution comprising NH₄OH is added to the aqueous solution such that the pH is raised from a value of below 1.5 to a value of above 6.5. The solution is preferably present in a stirred tank reactor to which the NH₄OH solution is supplied to over a time. The rate of addition should not be too fast such to allow crystals to grow. Larger crystals are preferred for ease of separation. The temperature is preferably between 50 °C and the boiling temperature of the solution, more preferably below 80 °C. The temperature is achieved by means of addition of steam to the tank reactor. The precipitated ammonium vanadate is separated from the aqueous solution, for example by means of filtration and/or centrifugation.

The ammonium vanadate is subsequently subjected to a calcination step to obtain vanadium pentoxide. Calcination is preferably performed at a temperature of above 550 °C. Suitable calcinations furnaces are of the so-called open or closed type. Ammonia as released during calcination is preferably isolated and re-used in the present process as NH₄OH or NH₄Cl in step (v) as described above.

In an alternative embodiment the precipitated vanadium compounds are contacted with hydrogen peroxide to obtain vanadium in its 5+ form and performing the calcination step in a closed furnace in the absence of added molecular oxygen.

Preferably nickel is separated from the aqueous solution poor in vanadium compounds as obtained in step (iii). Nickel is preferably separated in a step (vi) by means of cementation using zinc particles wherein the pH of the aqueous solution is adjusted to a pH of between 2 and 3.5 in order to improve a selective nickel cementation and to reduce undesired hydrogen formation. The pH of the aqueous solution obtained in step (iii) is preferably adjusted by adding Na₂CO₃ or NaOH. The zinc particles preferably have a largest diameter which is between 0.5 and 1 cm. This is advantageous because a more simple downstream filtration may then be applied. The cementation is preferably performed in a batch process, preferably in a rotating drum. The zinc particles with precipitated nickel can be easily separated from the aqueous solution. Some of the zinc particles will dissolve and hydrogen will be formed as a by-product. These zinc compounds are preferably separated from the aqueous solution as obtained in step (vi) by adding Na₂CO₃ and raising the pH of the aqueous solution from a value of below 4.5 to a value of between 7 and 8 in a step (vii) such that zinc precipitates as ZnCO₃.

The aqueous solution as obtained in step (vii) may contain magnesium compounds, which originate from the starting ash compound. Preferably these magnesium compounds are precipitated as Mg(OH)₂ by raising the pH to from a value between 7 and 8 to a value of between 9.5 and 10.5 by means of NaOH in a step (viii).

The present process produces various qualities of aqueous solutions. Preferably the different water effluent streams of the present process are neutralised to obtain an aqueous solution having a pH of between 6 and 9. This aqueous solution is preferably used as the first aqueous solution as described above. The first aqueous solution will also comprise of fresh aqueous solution, for example tap water or boiler feed water.

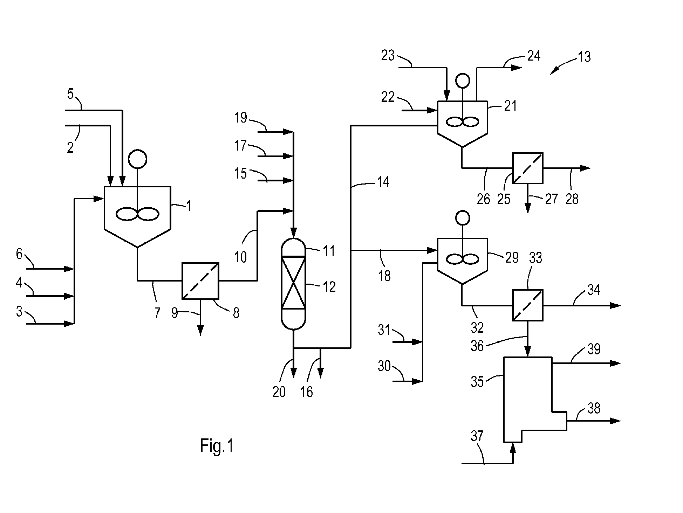

The invention will be illustrated using Figure 1. Figure 1 is a simplified flow chart of a possible embodiment of the invented process. Figure 1 shows an agitated tank reactor 1 to which the ash composition can be fed via supply line 2. To said tank reactor 1 the first aqueous solution is fed via line 3. After contacting the ash composition with the first aqueous solution in reactor 1 for a sufficient period of time a concentrate of H₂SO₄ is added to said tank reactor 1 via supply line 4 to arrive at a second aqueous solution. After a period of time solid Na₂SO₃ is added via line 5. Finally a solution of NaOH is added via line 6 to increase the pH of the solution in the tank reactor before said solution is let down via discharge line 7 to filter 8. In filter 8 solid ash particles are separated via line 9 from the aqueous solution as in line 10 containing the vanadium compounds. The aqueous solution in line 10 is fed to a vessel 11 containing a bed 12 of ion exchange resin. For practical reasons more vessels 11 may be used in parallel, for example 2 or 3 vessels in parallel. This is advantageous because at one time one vessel 11 may be loaded with feed, while the other vessels are subjected to desorption or regeneration. The aqueous solution poor in vanadium compounds is discharged from said vessel and fed to a nickel recovery unit 13 via line 14. Subsequently iron compounds are desorpted from the loaded ion-exchange resin with an aqueous solution, as supplied via 15. This aqueous solution is selective for iron and not selective for desorption of vanadium compounds. The iron containing effluent is discharged via line 16. Subsequently vanadium compounds are desorbed from the ion exchange resin rich in vanadium compounds by contacting the ion exchange resin bed 12 with an aqueous solution of H₂SO₄ as supplied via line 17 to obtain the aqueous solution rich in vanadium compounds as discharged in line 18. The ion exchange resin bed 12 is regenerated by subsequently passing an aqueous solution of NaOH and HCl as supplied via line 19 over said bed 12. The effluent as obtained during said regeneration is supplied to the water upgrading section (not shown) via line 20.

Via line 14 the aqueous solution poor in vanadium compounds is supplied to an agitated tank reactor 21. Said tank reactor is further connected to a supply line 22 for an aqueous solution of Na₂CO₃ or NaOH and a supply line 23 for adding zinc particles. Tank reactor 21 further has an outlet line 24 for hydrogen gas. After a sufficient contact time the content of reactor 21 is let down to a filter 25 via line 26. In filter 25 solid nickel particles and nickel coated zinc particles are separated as 27 from an aqueous solution discharged from filter 25 via line 28.

Via line 18 the aqueous solution rich in vanadium compounds is supplied to an agitated tank reactor 29. Said tank reactor 29 is further connected to a supply line 30 for an aqueous solution comprising NH₄OH. After supplying the NH₄OH solution hydrogen peroxide can be supplied via line 31. After that a red cake has been formed the content of reactor 29 is let down to filter 33 via line 32. In filter 33 solid vanadium compounds are separated from an aqueous solution discharged from said filter via line 34. The vanadium solid compounds are supplied to a closed furnace 35 via line 36. In closed furnace 36 the vanadium solids are heated for a sufficient period of time by means of indirect heat exchange with a hot fuel gas supplied via 37. The vanadium pentoxide thus formed is discharged via line 38 and ammonia which is released during calcination is discharged via line 39. This ammonia is re-used to prepare the NH₄OH solution of line 30.

The aqueous solutions obtained in lines 16 and 28 may contain iron and magnesium and zinc. Preferably these metals are either separately or in any combination separated from these aqueous solutions. The aqueous solution poor in these metals may advantageously be reused in the process according to the present invention. The aqueous effluents of line 20 and 34 may also be re-used in a preferred embodiment after neutralisation as described above.

The invention will be illustrated by means of the following non-limiting example.

### Example 1

100 kg of an ash composition having the following properties is subjected to the process of the present invention. According to XRF analysis the elements as present in the ash were computed as oxides as listed in Table 1.

**Table 1**

| compounds | Weight content (%) |
|---|---|
| V₂O₅ | 37 |
| NiO | 3-4 |
| SiO₂ | 0.4-1 |
| F₂O₃ | 0.6-1 |
| MgO | 4-5 |
| Na₂O | 2-3 |
| P₂O₅ | 0.03-0.05 |
| CaO | 0.6-1 |
| SO₃ | 33-40 |

A detailed phase analysis with XRD was also carried out on the fly ash. Basically, the following vanadium phases are found: Vanadyl sulphate hydrate (VOSO₄*3H₂O), Shcherbinaite (V₂O₅), Vanadyl sulphate hydrate (VOSO₄*2H₂O), Magnesium vanadium oxide (Mg₂V₂O₇), sodium vanadium oxide (NaV₃O₈), Magnesium vanadium oxide (Mg₂VO₄), and Vanadium oxide (V₄O₉).

The ash composition is first contacted during 2 hours with a first aqueous solution having a pH of 7 in an agitated tank reactor at 80 °C. The solids content during contacting was 20 wt%. About 55% of the vanadium present in the ash composition dissolves into the aqueous solution in this step. To said solution a concentrated solution of H₂SO₄ is added to lower the pH to below 1. The resulting mixture is stirred for 4 hours at 80 °C in the agitated tank reactor. The solids content during contacting was 20 wt%. About 95% of the vanadium which was still present in the ash particles dissolved into the aqueous solution in this step. Subsequently a stiochometric amount of solid Na₂SO₃ is added to the mixture in the same agitated tank reactor to convert vanadium to its VO²⁺ state and iron to its ferrous state.

The ash particles are separated from the solution and the pH of the resulting solution is increased to 1.2 by adding an aqueous NaOH solution.

The resulting aqueous solution was cooled to 50 °C and subsequently passed in a continuous mode over a Duolite C467 ion-exchange resin as present in a column. The resulting ion-exchange resin was loaded with vanadium and iron compounds and the resulting aqueous solution leaving the column was poor in these compounds. The amount of ion-exchange resin was sufficiently high that no breakthrough of either vanadium or iron compounds takes place.

Iron was removed from the loaded ion-exchange resin by passing an aqueous solution of EDTA over said ion-exchange resin.

Vanadium was subsequently removed from the loaded ion-exchange resin by passing an aqueous solution of sulphuric acid over said ion-exchange resin. After elution with sulfuric acid, a solution rich in vanadium was obtained, this slurry was directly subjected to pH adjustment with NH₄OH and subsequently oxidized with H₂O₂ wherein a precipitated red cake was obtained. In precipitation with concentrated ammonium hydroxide, the precipitation began at a pH of about 3.5 and was completed at a pH of about 7. Calcination of the precipitate at 600°C in a closed furnace produced vanadium pentoxide.

The vanadium pentoxide was weighted and it was found that 95 wt% of the vanadium as originally present in the ash composition was obtained as pure vanadium pentoxide. Purity of the obtained vanadium pentoxide was 99.5 wt%. The invention is thus especially directed to a process to prepare vanadium pentoxide having a purity of above 95 wt% and more preferably above 98 wt% en even more preferably above 99 wt%.

## Claims

1. Process for preparing vanadium pentoxide from an ash composition comprising solid ash particles, vanadium, iron and nickel compounds optionally present in an aqueous solution wherein the process comprises the following steps:
(i) leaching the ash composition by contacting the ash composition with an acid aqueous solution at a pH of below 1 wherein the vanadium compounds dissolve in the aqueous solution and separating the solid ash particles and the aqueous solution,
(ii) adding a reducing agent to the aqueous solution such that vanadium as present in the vanadium compounds is converted to VO²⁺ ions before, during or after separating the solid ash particles,
(iii) contacting the aqueous solution obtained in step (ii) with an ion exchange resin in its H⁺ ionic form, which ion exchange resin is selective for VO²⁺ ions, such to obtain an aqueous solution poor in vanadium compounds and an ion exchange resin loaded with vanadium compounds,
(iv) desorption of the vanadium compounds from the ion exchange resin rich in vanadium compounds by contacting the ion exchange resin with an aqueous solution of H₂SO₄ to obtain an aqueous solution rich in vanadium compounds,
(v) converting and isolating the vanadium compounds as present in the aqueous solution to vanadium pentoxide.

2. Process according to claim 1, wherein leaching step (i) is performed by first contacting the ash composition with a first aqueous solution having a pH of between 5 and 8 at a temperature of above 50°C and below the boiling temperature of the first aqueous solution, subsequently adding concentrated H₂SO₄ to said solution to arrive at a second aqueous solution having a pH of below 1 and contacting the ash composition with the second aqueous solution at a temperature of above 50 °C and below the boiling temperature of the second aqueous solution and separating the solid ash particles from the second aqueous solution which second aqueous solution is rich in vanadium, iron and nickel compounds.

3. Process according to claim 2, wherein the reducing agent is solid Na₂SO₃ and which reducing agent is added after contacting with the second aqueous solution and before separating the ash particles from said second aqueous solution.

4. Process according to any one of claims 1-3, wherein contacting with the first aqueous solution and contacting with the second aqueous solution is performed in the same stirred tank reactor or wherein contacting with the first aqueous solution, contacting with the second aqueous solution and addition of solid Na₂SO₃ is performed in the same stirred tank reactor.

5. Process according to any one of claims 1-4, wherein the pH of the aqueous solution obtained in step (ii) is adjusted to a value of between 1 and 2 before using said solution in step (iii).

6. Process according to claim 5, wherein the pH of the aqueous solution obtained in step (ii) is adjusted to a value of below 1.8 before using said solution in step (iii) .

7. Process according to any one of claims 1-6, wherein prior to step (iv) the loaded ion exchange resin is contacted with an aqueous solution which is selective for desorption of iron compounds from the loaded ion-exchange resin and not selective for desorption of vanadium compounds.

8. Process according to any one of claims 1-7, where converting and isolating the vanadium compounds in step (iv) is performed by first precipitation of the vanadium compounds from the aqueous solution by adding an aqueous solution comprising NH₄OH to the aqueous solution such that the pH is raised from a value of below 1.5 to a value of above 6.5, separating the precipitated vanadium compounds from the aqueous solution and performing a calcination step on the vanadium compounds to obtain vanadium pentoxide.

9. Process according to claim 8, wherein the precipitated vanadium compounds are contacted with hydrogen peroxide to obtain vanadium in its 5+ form and performing the calcination step in a closed furnace in the absence of added molecular oxygen.

10. Process according to any one of claims 1-9, wherein nickel is separated in a step (vi) from the aqueous solution poor in vanadium compounds as obtained in step (iii) by means of cementation using zinc particles wherein the pH of the aqueous solution is adjusted to a pH of between 2 and 3.5.

11. Process according to any one of claims 1-10, wherein the ash composition has a vanadium content (as an element) of between 10 and 30 wt% on a dry-solids basis.

12. Process according to any one of claims 1-11, wherein the ash composition is obtained when fully or partially combusting the residual fractions of mineral oil feedstock or partial combustion of petroleum coke or coal.
